# EUROPÄISCHE PATENTANMELDUNG

(11) **EP 2 599 569 A1**
(43) Veröffentlichungstag der Anmeldung: **05.06.2013**
(21) Anmeldenummer: 12007953.8
(22) Anmeldetag: 26.11.2012
(51) Int. Cl.: B23B 51/02, B23B 51/08

(54) **Maschinenwerkzeug zur spanabhebenden Bearbeitung**

(30) Priorität: 29.11.2011 DE 102011119609
(71) Anmelder: Jakob Lach GmbH & Co. KG, 63452 Hanau (DE)
(72) Erfinder: Lach, Horst, 63450 Hanau (DE)
(74) Vertreter: Erb, Henning

(57) **Zusammenfassung**

Das Maschinenwerkzeug zur spanabhebenden Bearbeitung weist an einem Schaft (10) oder Werkzeugkörper einen Schneidenteil (12) mit wenigstens einer Schneidkante aus einem ultraharten Schneidstoff, wie Diamant oder Bornitrid, auf. Um den insgesamt notwendigen Aufwand für die Herstellung von Werkstücke zu senken, ist der Schaft (10) oder Werkzeugkörper mit einem Schleif- oder Reibbelag (16) versehen. Dieser Reibbelag ist auf einer von wenigstens der einen Schneidkante erzeugten oder einer benachbarten Fläche oder Kante eines Werkstücks schleifend oder reibend einsetzbar. Es bedarf daher keiner Umrüstung zum Einsatz eines weiteren Werkzeugs.

## Beschreibung

Die Erfindung betrifft ein Maschinenwerkzeug zur spanabhebenden Bearbeitung, das an einem Schaft oder Werkzeugkörper einen Schneidenteil mit wenigstens einer Schneidkante aus einem ultraharten Schneidstoff, wie Diamant oder Bornitrid aufweist. Derartige Maschinenwerkzeuge werden zwar wegen ihrer wesentlich längeren Standzeiten auch zur Bearbeitung von Werkstücken aus verhältnismäßig leicht spanbaren Werkstoffen, wie z. B. Leichtmetalliegierungen, benutzt. Zweckmäßig oder sogar notwendig ist ihr Einsatz aber vor allem bei der Bearbeitung von Werkstücken aus schwer spanbaren und abrasiven Werkstoffen, wie z. B. Keramik- und Hartmetall-Grünlingen, Sinterwerkstoffen, Werkzeugstahl, Graphitkohle, zementgebundenen Spanplatten und glas- sowie carbonfaserverstärktem Kunststoff. Die Schneidkanten der hierbei zum Einsatz kommenden Werkzeuge bestehen je nach Einsatzbedingungen und Verfügbarkeit meistens aus polykristallinem Diamant (PKD), cubischem Bornitrid (PKBn), oder auch z. B, aus Diamantbeschichtungen.

In vielen Fällen genügen die bei der Bearbeitung eines Werkstücks aus schwer spanbarem oder abrasivem Material mittels eines Bohr-, Dreh- oder Fräswerkzeugs erzeugten Flächen und Randkanten noch nicht den gestellten Anforderungen. Zum Glätten, Ausreiben, Polierten, Schleifen oder Entgraten ist oft ein weiterer Eearbeitungsvorgang erforderlich, der bisher mittels eines anderen Werkzeugs, oft sogar in einer anderen Aufspannung ausgeführt wird.

Der Erfindung liegt die Aufgabe zugrunde, in diesen Fallen den insgesamt notwendigen Aufwand für die Herstellung der Werkstücke zu senken, und diese Aufgabe wird erfindungsgemäß dadurch gelöst, dass der Werkzeugschaft oder -körper mit einem Schleif- oder Reibbelag versehen ist, der auf einer von der wenigstens einen Schneidkante erzeugten oder einer benachbarten Fläche oder Kante eines Werkstücks schleifend oder reibend einsetzbar ist.

Das durch die Erfindung geschaffene Werkzeug ist eine Kombination eines mittels Schneidkanten aus ultrahartem Schneidstoff spanabhebend, z. B, bohrend, drehend oder fräsend wirksamen Werkzeugsteils mit einem schleifend oder reibend wirksamen Werkzeugteil, die beide auf demselben Werkzeugschaft oder -körper angebracht sind. Infolgedessen können die von den beiden Werkzeugteilen auszuführenden Bearbeitungsvorgängen mit minimalem Zeit- und Transportaufwand unmittelbar nacheinander ausgeführt werden, oft sogar in derselben Aufspannung und unter Beibehaltung der Ausrichtung der Mittellängsachse des Werkzeugschafts oder -körpers mit Bezug auf das Werkstück.

Die Erfindung lässt sich unabhängig davon ausführen, ob bei der Bearbeitung mittels der Schneidkanten das Werkzeug und/oder das Werkstück rotiert und ob dabei eine zylindrische, anders gekrümmte oder ebene Fläche am Werkstück erzeugt wird. Danach kann mit dem Schleif- oder Reibbelag desselben Werkzeugs diese Fläche, eine ihrer Randkanten und/oder eine benachbarte, mittelbar oder unmittelbar angrenzende, stufenförmig abgesetzte, ebene, schräge oder konische Fläche schleifend oder reibend bearbeitet werden. Dabei kann der Schleif- oder Reibbelag unter Berücksichtigung seiner Form und seines Durchmessers axial hinter oder ggf. auch vor den Schneidkanten am Schaft angebracht sein.

In der bevorzugten Ausgestaltung der Erfindung weist der Schleif- oder Reibbelag Körner aus einem ultraharten Schneidstoff, wie Diamant oder Bornitrid auf, wobei die Aufbringung des Belags in einer oder mehreren Schichten, z. B. galvanisch oder im Vakuum, mehrere Ausführungsvarianten zulässt.

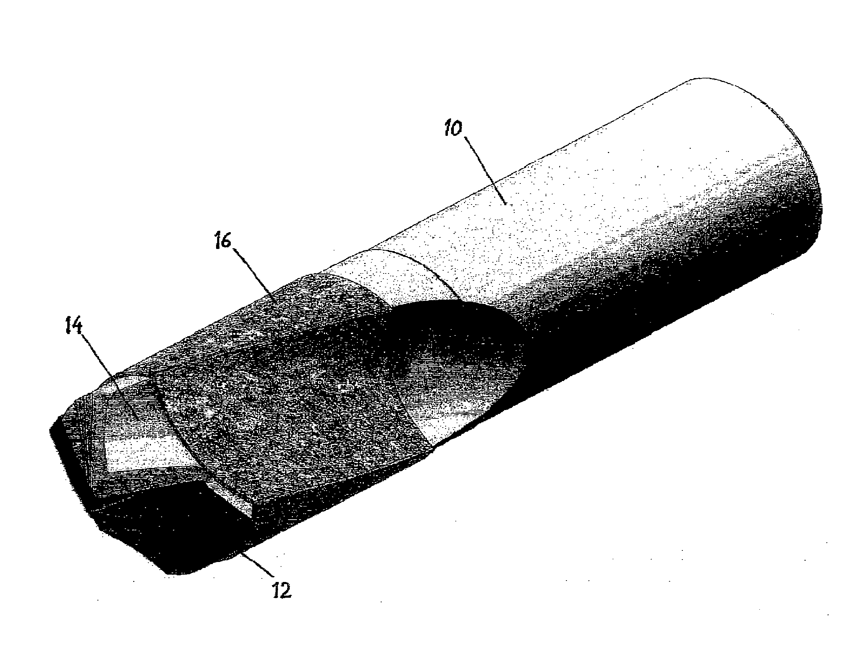

Ein Ausführungsbeispiel der Erfindung wird nachstehend anhand der beigefügten Zeichnung näher erläutert. Diese zeigt in perspektivischer Darstellung ein Bohrwerkzeug. Allerdings ist die Erfindung nicht auf Bohrwerkzeuge beschränkt, sondern lässt sich auch z. B. in Form eines Dreh- oder Fräswerkzeuges realisieren.

Das dargestellte Werkzeug hat einen Schaft 10, an dessen hinteren Ende es im Beispielsfall in einem geeigneten Bohrfutter einer Bohrmaschine eingespannt werden kann. An seinem vorderen Ende ist der Schaft 10 mit einer Bohrschneide 12 bestückt. Sie ist in eine sich quer durch das vordere Ende des Schafts 10 erstreckende Aussparung eingesetzt und besteht im Beispielsfall aus einer einstückig mit einer Hartmetallunterlage verbundenen Schicht aus polykristallinem Diamant. Diese Schicht bildet die Schneidkanten der Bohrschneide 12. Die Schicht aus Hartmetall ist mit dem aus Stahl bestehenden Schaft 10 durch Löten verbunden.

Weiterhin gezeigt ist in der Zeichnung eine Spannut 14. Diese sowie die übrigen bis hierher beschriebenen Merkmale des Werkzeugs sind in dieser oder ähnlicher Form auch bei anderen, herkömmlichen Werkzeugen vorhanden.

Neu ist ein axial hinter der Bohrschneide 12 auf den Umfang des Schafts 10 aufgetragener Schleif- oder Reibbelag 16. Je nach beabsichtigter Anwendung kann es sich dabei um ein übliches Schleif-oder Reibmaterial handeln, vorzugsweise enthält es jedoch in Anlassung an die Bohrschneide 12 ebenfalls Schleif- oder Reibkörner aus Diamant oder CBN. Der Auftrag auf den Umfang des Schafts 10 erfolgt z. B. galvanisch oder im Vakuum. Es vereinfacht ggf. die Herstellung, wenn der Schweif- oder Reibbelag 16 über den gesamten Umfang des Schafts 10 aufgetrager. wird, wie gezeigt, auch in der Spannut 14.

In einer bevorzugten Ausführungsform entspricht der Außendurchmesser des Schleif- und Reibbelags 16 dem Durchmesser des mittels der Bohrschneide 12 erzeugten Bohrlochs. In diesem Fall kann bei Fortsetzung des Bohrvorschubs unmittelbar im Anschluss an den Bohrvorgang die erzeugte Bohrungswand mittels des Schleif- oder Reibbelags 16 schleifend bzw. reibend nachbearbeitet werden. Weiterhin besteht die Möglichkeit, gleich einem Fräsprozess Langlöcher oder ähnliche Konturen zu schleifen und dabei in der X- oder Y-Ebene zu verfahren. In Verbindung mit einer geeigneten Steuerung der Ausrichtung und Verfahrbewegung des kombinierten Bohr- und schleifwerkzeugs relativ zum Werkstück können auch andere Flächen oder Kanten des Werkstücks geglättet oder entgratet werden, z. B. auch Flächen oder Kanten, die durch eine andere Arbeitsoperation erzeugt worder. sind, Es kann sich dabei z. B. auch um konische oder Stufenflächen handeln, ggf. auch um ebene, gerade Schnittflächen, die vor oder nach einer Bohrbearbeitung entgratet werden sollen. Je nach der Art der zu schleifenden oder reibend zu bearbeitenden Fläche oder Kante hat ggf. der Schleif- oder Reibbelag 16 einen größeren oder kleineren Durchmesser als die Bohrschneide 12 und auch eine der jeweiligen Arbeitsaufgabe angepasste Form.

## Patentansprüche

1. Maschinenwerkzeug zur spanabhebenden Bearbeitung, das an einem Schaft (10) oder Werkzeugkörper einen Schneidenteil (12) mit wenigstens einer Schneidkante aus einem ultraharten Schneidstoff, wie Diamant oder Bornitrid, aufweist, **dadurch gekennzeichnet, dass** der Schaft (10) oder Werkzeugkörper mit einem Schleif- oder Reibbelag (16) versehen ist, der auf einer von wenigstens der einen Schneidkante erzeugten oder einer benachbarten Fläche oder Kante eines Werkstücks schleifend oder reibend einsetzbar ist.

2. Maschinenwerkzeug nach Anspruch 1, **dadurch gekennzeichnet, dass** es selbst oder das Werkstück rotierend antreibbar ist.

3. Maschinenwerkzeug nach Anspruch 1 oder 2, **dadurch gekennzeichnet, dass** es ein Bohr-, Dreh- oder Fräswerkzeug ist.

4. Maschinenwerkzeug nach einem der Ansprüche 1 bis 3, **dadurch gekennzeichnet, dass** der Schleif- oder Reibbelag (16) in derselben Relativstellung der Mittellängsachse des Schafts (10) oder Werkzeugkörpers mit Bezug auf das Werkstück wie beim Bohren, Drehen oder Fräsen oder einer geänderten Stellung schleifend oder reibend einsetzbar ist.

5. Maschinenwerkzeug nach einem der vorhergehenden Ansprüche, **dadurch gekennzeichnet, dass** der Schleif- oder Reibbelag (16) Körner aus einem ultraharten Schneidstoft, wie Diamant oder Bornitrid, aufweist.

6. Meschinenwerkzeug nach einem der vorhergehenden Ansprüche, **dadurch gekennzeichnet, dass** der Schleif- oder Reibbelag (16) auf dem Schaft (10) oder Werkzeugkörper axial hinter oder vor dem Schneidenteil (12) angebracht ist.
